# EUROPEAN PATENT APPLICATION

(11) **EP 4 575 509 A1**
(43) Date of publication of application: **25.06.2025**
(21) Application number: 23854112.2
(22) Date of filing: 29.06.2023
(51) Int. Cl.: G01N 35/04, G01N 35/02, G01N 35/00

(54) **SAMPLE LOADING/UNLOADING APPARATUS, AUTOMATIC ANALYZER AND OPERATION METHOD THEREOF**

(30) Priority: 18.08.2022 CN 202210993955
(71) Applicant: Beckman Coulter Laboratory Systems (Suzhou) Co. Ltd., Suzhou, Jiangsu 215021 (CN)
(72) Inventor: ZHAO, Liang, Suzhou, Jiangsu 215021 (CN); LI, Kunyang, Suzhou, Jiangsu 215021 (CN)
(74) Representative: Maiwald GmbH
(86) International application number: PCT/CN2023/103677
(87) International publication number: WO 2024/037207

(57) **Abstract**

The application relates to a sample loading/unloading apparatus for an automatic analyzer, an automatic analyzer comprising the sample loading/unloading apparatus, and an operation method of the automatic analyzer. The sample loading/unloading apparatus comprises: a tray configured to carry a plurality of sample racks on which sample containers are loaded, and to be placed in a sample loading/unloading area of the automatic analyzer; and a sample rack holder engaged with the tray and movable between a first position where the sample racks are held in place and a second position where the sample racks are allowed to be released within the sample loading/unloading area. The sample loading/unloading apparatus in the present application can load or unload sample racks in batches, so that the efficiency of the automatic analyzer can be remarkably improved.

## Description

The present application claims the priority to Chinese Patent Application No. 202210993955.6, filed with the China National Intellectual Property Administration on August 18th, 2022, the entire content of which is incorporated herein by reference.

### FIELD

The present application relates to the medical technical field. Specifically, the present application relates to a sample loading/unloading apparatus, an automatic analyzer including the sample loading/unloading apparatus, and an operation method thereof.

### BACKGROUND

The contents of this section merely provide background information related to the present application, which may not constitute prior art.

Various analytical detection instruments (also referred as "automatic analyzers" herein) for detecting samples in test tubes or cups are indispensable in the medical field, especially clinical medicine and laboratory medicine. When there are multiple samples, requirements for the processing capacity of the automatic analyzer are put forward.

The automatic analyzer typically uses sample racks to carry multiple sample containers, such as test tubes or cups, wherein each of the sample containers contains a sample to be detected or analyzed. For some known existing automatic analyzers, when loading/unloading the sample racks, a door of the automatic analyzer is opened, and the sample racks are directly placed into a loading/unloading area of the automatic analyzer one by one or directly taken out from the loading/unloading area one by one.

The existing automatic analyzers described above have low efficiency because the sample racks are loaded/unloaded one-by-one. In addition, when the sample racks are placed into or taken out from the loading/unloading area of the automatic analyzer, it is easy to cause contamination to the loading/unloading area, for example, by splashing out of the sample. The loading/unloading area of the automatic analyzer is not easy to clean. In addition, the sample racks are usually elongated, so that the sample racks are unstable and prone to toppling over.

### SUMMARY

In view of the above problems of existing automatic analyzers, an object of the present application is to provide a sample loading/unloading apparatus, which can load or unload sample racks in batches. So the efficiency of the automatic analyzer can be significantly improved.

Another object of the present application is to provide a sample loading/unloading apparatus which is easy to clean and/or can prevent sample racks from toppling over.

According to one aspect of the present application, a sample loading/unloading apparatus for an automatic analyzer is provided. The sample loading/unloading apparatus includes: a tray configured to carry multiple sample racks on which sample containers are loaded, and to be placed in a sample loading/unloading area of the automatic analyzer; and a sample rack holder engaged with the tray and movable between a first position where the sample racks are held in place and a second position where the sample racks are allowed to be released within the sample loading/unloading area.

In some embodiments, the tray is provided with multiple parallel receiving channels for separating the sample racks from each other.

In some embodiments, the tray is provided with indicators for indicating whether the sample racks are loaded.

In some embodiments, the tray is provided with a handle for operation on each of two opposite sides of the tray, respectively.

In some embodiments, the sample rack holder is transverse to the multiple receiving channels and is located at an end of each of the multiple receiving channels.

In some embodiments, the sample rack holder is in the form of an elongated rod.

In some embodiments, the sample rack holder is provided with at least two convex structures, and the tray is provided with corresponding concave structures for receiving the convex structures respectively.

In some embodiments, each of the convex structures includes a first guide portion, and each of the concave structures includes a second guide portion for receiving the first guide portion to guide movement of the sample rack holder.

In some embodiments, each of the convex structures is in the form of a pin that extends from the sample rack holder.

In some embodiments, each of the concave structures extends downward from an upper surface of the tray such that the sample rack holder moves in a vertical direction.

In some embodiments, the sample rack holder has an inclined portion inclined in a movement direction of the sample rack holder for being pushed downward so that the sample rack holder moves from the first position to the second position.

In some embodiments, an elastic member is further included, and the elastic member is provided between the tray and the sample rack holder to apply an upward force to the sample rack holder.

According to another aspect of the present application, there is provided an automatic analyzer including the above sample loading/unloading apparatus. The automatic analyzer further includes: a housing, in which a sample loading/unloading area is defined; and an actuator, configured to move the sample rack holder between the first position and the second position.

In some embodiments, the actuator is attached to at least an inner sidewall of the housing.

In some embodiments, the actuator has a cylindrical outer peripheral surface which is configured to press down the inclined portion of the sample rack holder.

In some embodiments, the actuator is rotatable.

In some embodiments, the automatic analyzer further includes a drawer. The drawer is movable relative to the housing and on which the sample loading/unloading apparatus can be placed such that the sample loading/unloading apparatus moves with the movement of the drawer.

According to yet another aspect of the present application, an operation method of the automatic analyzer is provided. The method includes the steps of: placing at least one sample rack on the sample loading/unloading apparatus; placing the sample loading/unloading apparatus in the automatic analyzer; moving the sample loading/unloading apparatus from the first position to the second position within the sample loading/unloading area; analyzing samples in sample containers on the sample rack; returning the sample rack to the sample loading/unloading area after finishing analyzing; moving the sample loading/unloading apparatus from the second position to the first position; and taking out the sample loading/unloading apparatus from the automatic analyzer.

Other application fields will become apparent from the description provided herein. It should be understood that the specific examples and embodiments described in this section are for illustration purposes only and are not intended to limit the scope of the present application.

### BRIEF DESCRIPTION OF THE DRAWINGS

Features and advantages of one or more embodiments of the present application will become more easily understood from the following description with reference to the accompanying drawings, in which:
FIG. 1A is a schematic perspective view of an automatic analyzer according to an embodiment of the present application;
FIG. 1B is a schematic perspective view of the automatic analyzer in FIG. 1A with a top cover of a sample rack manipulation unit is removed;
FIG. 1C is a schematic partial enlarged view of the automatic analyzer in FIG. 1B;
FIG. 2A is a schematic perspective view of a drawer of the automatic analyzer;
FIG. 2B is another schematic perspective view of the drawer in FIG. 2A;
FIG. 2C is a schematic perspective view of a locking device of the drawer, wherein the drawer is in an unlocked state;
FIG. 2D is a schematic view similar to FIG. 2C, wherein the drawer is in a locked state;
FIG. 3A to FIG. 3D are various schematic perspective views of a sample loading/unloading apparatus according to an embodiment of the present application;
FIG. 3E is a schematic partial enlarged view of the sample loading/unloading apparatus in FIG. 3A to FIG. 3D, showing the limit of the sample rack by the sample loading/unloading apparatus;
FIG. 4 shows a limiting structure according to a first embodiment of the present application;
FIG. 5A to FIG. 5C show the movement of the limiting structure in FIG. 4 from a limiting position to a releasing position;
FIG. 6A to FIG. 6C show a limiting structure according to a second embodiment of the present application and the movement of the limiting structure from a limiting position to a releasing position;
FIG. 7A to FIG. 7C show a limiting structure according to a third embodiment of the present application and the movement of the limiting structure from a limiting position to a releasing position;
FIG. 8A to FIG. 8B show a limiting structure according to a fourth embodiment of the present application and the movement of the limiting structure from a limiting position to a releasing position; and
FIG. 9 is a flowchart of an operation method of an automatic analyzer according to an embodiment of the present application.

Corresponding reference numerals in the accompanying drawings indicate the same or corresponding components and features throughout.

### DETAILED DESCRIPTION OF THE EMBODIMENTS

Exemplary embodiments will now be described more comprehensively with reference to the accompanying drawings.

Exemplary embodiments are provided so that the present application will be thorough and will more fully transport the scope to those skilled in the art. Many specific details such as examples of specific components, apparatuses, and methods are set forth to provide a thorough understanding of various embodiments of the present application. It will be apparent to those skilled in the art that the exemplary embodiments may be implemented in many different forms without specific details, and should not be construed as limiting the scope of the present application. In some exemplary embodiments, well-known processes, well-known apparatus structures, and well-known techniques are not described in detail.

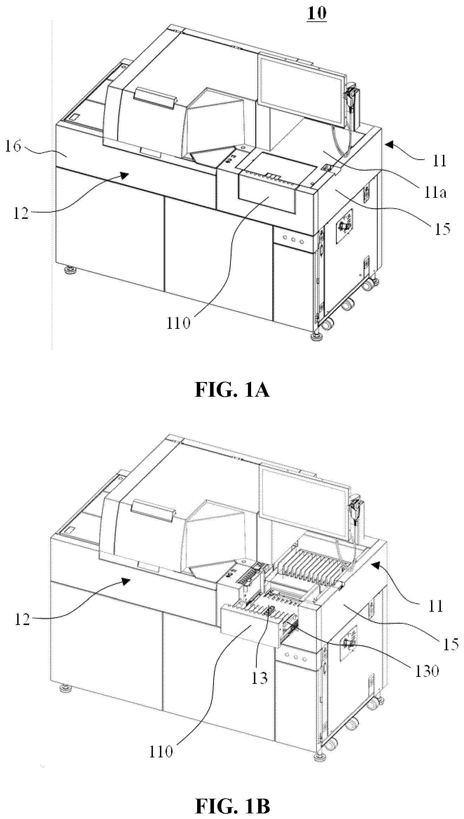

An automatic analyzer 10 according to an embodiment of the present application will be described below with reference to FIG. 1A to FIG. 1C. It should be understood that the automatic analyzer 10 shown in the figures is merely illustrative and should not be limited to the specific examples shown in the figures. The automatic analyzer according to the present application may be any suitable automatic analyzer for testing or processing biological samples or other chemical samples, for example, a clinical chemical detector or an immunoassay detector.

As shown in FIG. 1A to FIG. 1C, the automatic analyzer 10 includes a sample rack manipulation unit 11 and a sample processing unit 12. The sample rack manipulation unit 11 is configured to load or unload a sample rack 13 carrying sample containers, and to transport the sample rack 13 to a predetermined position in the automatic analyzer 10. The sample processing unit 12 is configured to collect samples in the sample containers and process the samples, for example, to detect the samples. The sample rack manipulation unit 11 and the sample processing unit 12 may be independent units, or may be integrated into one unit.

The sample rack 13 is configured to receive, support, align, and hold one or more sample containers (not shown) containing samples. In the example shown in the figures, multiple sample containers are arranged in a row on the sample rack 13. The sample rack 13 may be a universal sample rack for common sample containers such as test tubes or cups. For example, the universal sample rack 13 may be purchased from Beckman Coulter, Inc. It should be understood that the automatic analyzer according to the present application may be adapted to load or unload multiple sample racks 13 at the same time, but it is not limited to the specific structure of the sample racks 13.

The structure of the sample processing unit 12 may vary depending on the type of automatic analyzer. The sample processing unit 12 may have any known structure in the art for processing samples, which will not be described in detail herein.

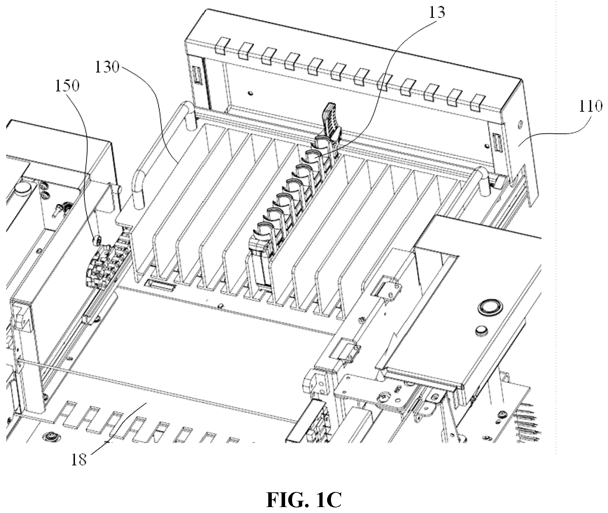

The sample rack manipulation unit 11 includes a housing 15, a drawer 110, and a sample loading/unloading apparatus 130. The housing 15 of the sample rack manipulation unit 11 and a housing 16 of the sample processing unit 12 constitute a housing of the automatic analyzer 10. In FIG. 1B and FIG. 1C, a top cover 11a of the housing 15 is removed in order to clearly show an internal structure of the sample rack manipulation unit 11.

A sample loading/unloading area 18 is defined in the housing 15. A shuttle (not shown) may engage with the sample racks 13 located in the sample loading/unloading area 18 and transport the sample racks 13 to a desired location, for example, a sample collection location. The shuttle (not shown) may send the sample racks 13 back to the sample loading/unloading area 18 so as the sample racks 13 may be taken out after the samples have been processed.

The sample loading/unloading apparatus 130 is configured to carry multiple sample racks 13. The sample loading/unloading apparatus 130 is placed on the drawer 110 and can move together with the drawer 110 to reach the sample loading/unloading area 18 (i.e. loading the sample racks 13) or be far away from the sample loading/unloading area 18 (i.e. unloading the sample racks 13).

The automatic analyzer 10 according to the present application can easily load or unload the sample racks 13 in batches by means of the sample loading/unloading apparatus 130 and the drawer 110, thereby significantly improving the efficiency.

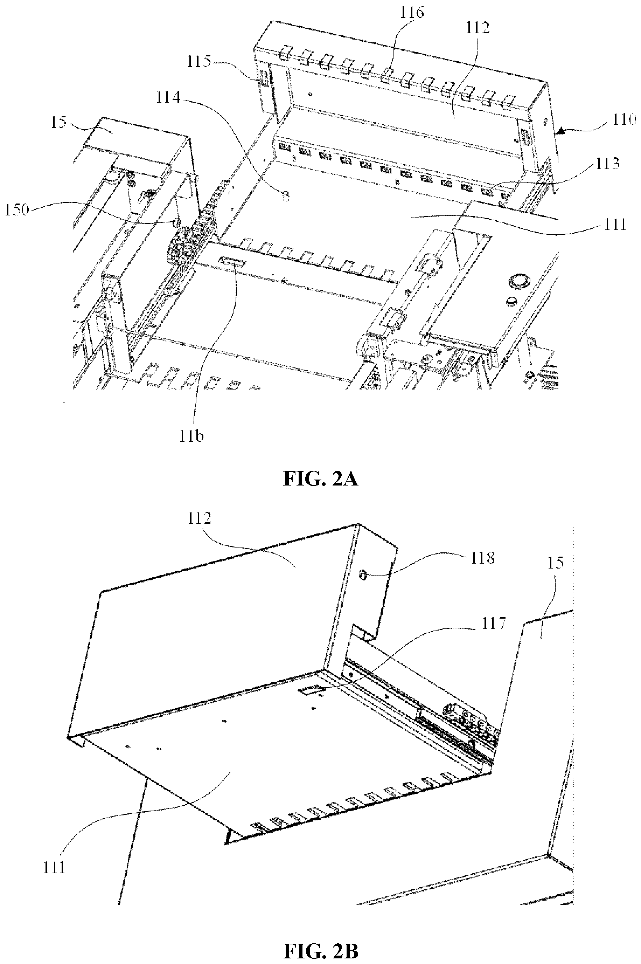

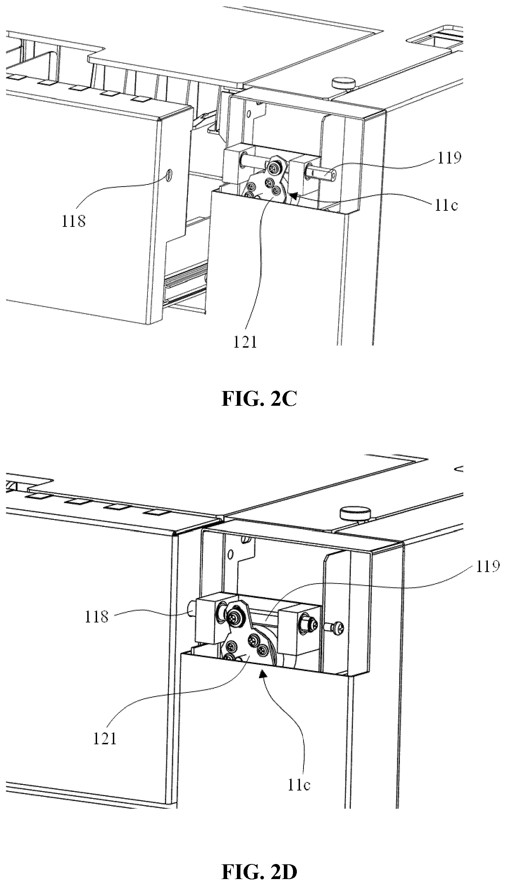

The drawer 110 according to the present application will be described below with reference to FIG. 2A to FIG. 2D. The drawer 110 is configured to move between a closed position shown in FIG. 1A and FIG. 2D and an open position shown in FIG. 1B to FIG. 2B.

As shown in FIG. 2A to FIG. 2D, the drawer 110 includes a substrate 111 for supporting the sample loading/unloading apparatus 130 and a front cover 112 located at a front end (the end facing an operator) of the substrate 111. The front cover 112 and the housing 15 form a closed space. The front cover 112 may be secured to the substrate 111 in any suitable manner known in the art.

The substrate 111 may be coupled to the housing 15 in any suitable manner known in the art. As shown by way of the example in the figures, the substrate 111 may be coupled to the housing 15 by a guide rail. In addition, a chain may be provided between the substrate 111 and the housing 15, and the chain is electrically controlled to realize the automatic control and movement of the drawer 110.

Positioning pins 114 may be provided on the substrate 111. The positioning pins 114 are engaged with the sample loading/unloading apparatus 130 to accurately position the sample loading/unloading apparatus 130. The structure and number of the positioning pins 114 may be changed as required, and should not be limited to the specific examples shown in the figures, as long as the functions described herein can be achieved. For example, the positioning pins may be replaced by recess structures.

A drawer state detection device 117 may be provided on the substrate 111. The drawer state detection device 117 is configured to detect whether the drawer 110 is normally closed. For example, before the automatic analyzer 10 is started, the drawer state detection device 117 first detects whether the drawer 110 is in a closed state. Accordingly, the housing 15 may be provided with a detection feature 11b corresponding to or matched with the drawer state detection device 117. When the drawer state detection device 117 is aligned with the detection feature 11b, it indicates that the drawer 110 is closed.

Sample rack sensors 113 may be provided on the substrate 111. The sample rack sensors 113 are configured to sense whether the sample racks 13 are loaded. Accordingly, the front cover 112 may be provided with indicators, for example, indicator lights 116 shown in the figures. The indicator lights 116 may emit light of different colors based on the sensed result of the sample rack sensors 113. Whether the sample racks 13 have been loaded may be determined by the colors of the indicator lights 116.

The front cover 112 may be provided with a magnetic attraction structure 115. When it is necessary to close the drawer 110, the magnetic attraction structure 115 can magnetically attract the drawer 110 to the housing 15, thereby facilitating the closing of the drawer 110.

A locking device 11c may be mounted in the housing 15, as shown in FIG. 2C and FIG. 2D. In FIG. 2C and FIG. 2D, a portion of the housing 15 is removed in order to clearly show the locking device 11c. The locking device 11c is configured to lock the drawer 110 when the drawer 110 is closed, so as to prevent the drawer 110 from being accidentally opened when the automatic analyzer 10 is in operation. The locking device 11c includes a latch 119 and a cam 121. The latch 119 may be inserted into an aperture 118 in the front cover 112, so that the drawer 110 is locked. When the latch 119 exits the aperture 118, the drawer 110 is allowed to move. The cam 121 is configured to drive the latch 119. The cam 121 may be driven by, for example, a motor. It should be understood that the locking device should not be limited to the specific example shown in the figures, but may be varied as long as it can achieve the functions described herein.

It should be understood that the structure of the drawer and the portions thereof should not be limited to the specific examples shown in the figures, but may be varied as long as the functions described herein can be achieved.

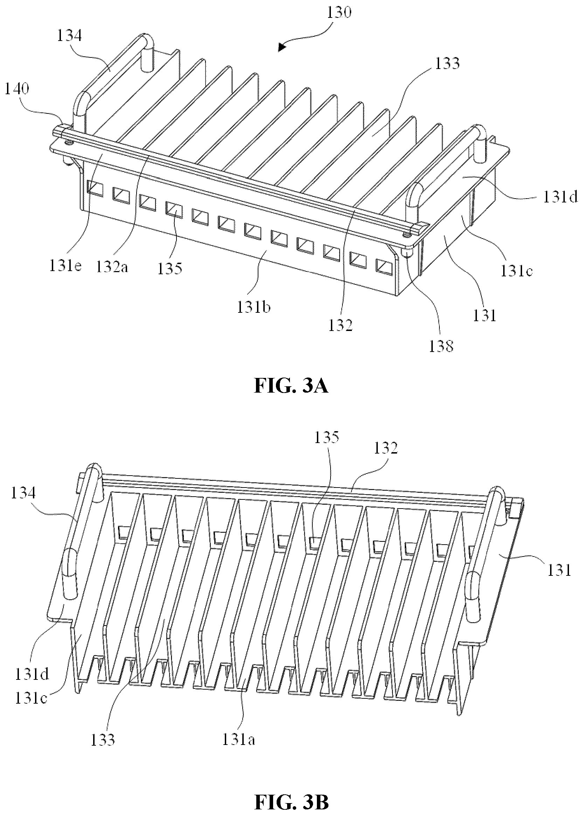

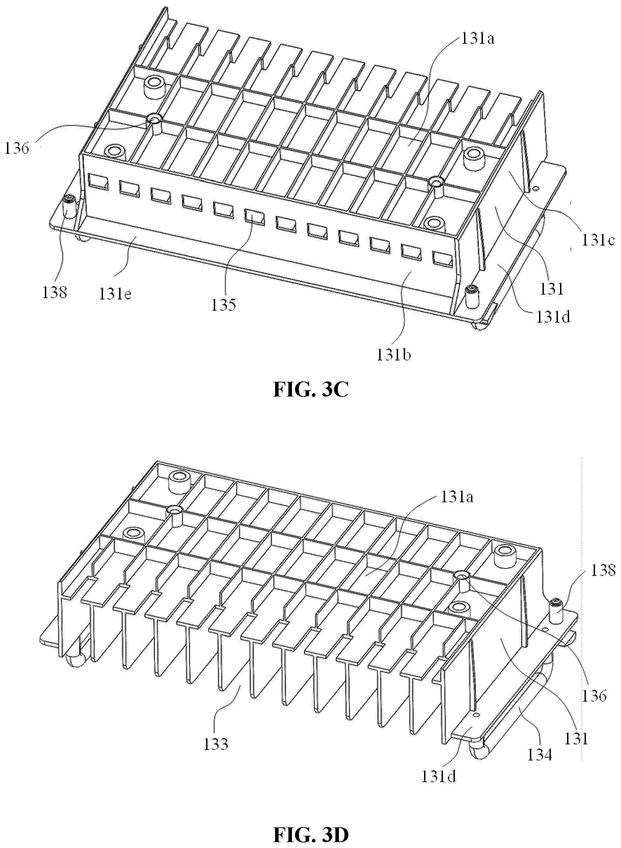

A sample loading/unloading apparatus 130 according to the present application will be described below with reference to FIG. 3A to FIG. 3E. As shown in FIG. 3A to FIG. 3E, the sample loading/unloading apparatus 130 includes a tray 131 and a sample rack holder 132.

The tray 131 is configured to carry multiple sample racks 13. When the drawer 110 with the sample loading/unloading apparatus 130 is moved to the closed position, the tray 131 is placed in the sample loading/unloading area 18 of the automatic analyzer 10. In this case, the shuttle (not shown) may be engaged with the sample racks 13 on the tray 131 and transport the sample racks 113 to a predetermined position, for example, a sample collection position, or the shuttle (not shown) may transfer the sample racks 13 to the tray 131.

The tray 131 includes a bottom plate 131a, a front plate 131b located at a front end (an end facing an operator) of the bottom plate 131a, and side plates 131c located on two opposite sides of the front plate 131b. The bottom plate 131a, the front plate 131b and the side plates 131c define a space for accommodating the sample racks 13. Partition plates may be provided in the space to form multiple parallel receiving channels 133 that separate the sample racks 13 from each other. The receiving channels 133 are configured to stably support the sample racks 13 to prevent the sample racks 13 from toppling over and the like.

The tray 131 may be provided with a handle 134 for operation. As shown in the figures, a flange 131d may be provided at an upper end of each of the side plates 131c, and the handle 134 is mounted on the flange 131d. It should be understood that the handle 134 may be changed or omitted. For example, the operator may directly handle the sample loading/unloading apparatus 130 by means of the flange 131d.

The tray 131 may be provided with an indicator 135 for indicating whether the sample racks 13 are loaded. For example, the indicator 135 may be in the form of a window or an opening. An indicator 135 may be provided for each of the receive channels 133. In this way, it may be observed that which receiving channel 133 has been loaded with the sample rack 13 through the indicators 135. The indicators 135 may correspond to the sample rack sensors 113 shown in FIG. 2A, respectively. For example, the sample rack sensors 113 may be photoelectric sensors or any other suitable sensors. The structure of the indicators 135 may be designed according to the type of the sample rack sensors 113.

The bottom plate 131a may be provided with positioning holes 136. The positioning holes 136 are configured to receive the positioning pins 114 shown in FIG. 2A.

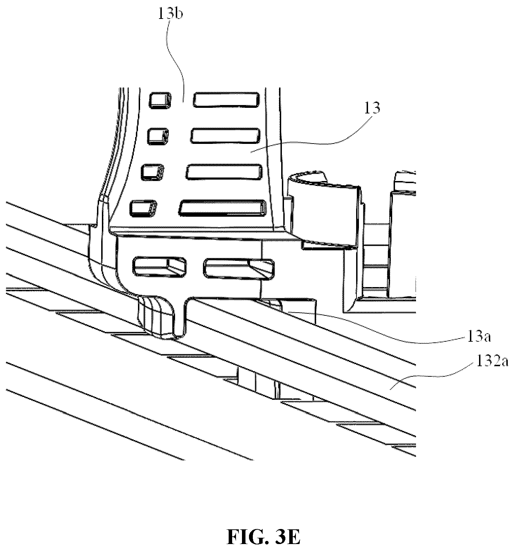

The sample rack holder 132 is configured to hold the sample racks 13 to prevent the sample racks 13 from moving. In the example shown in the figures, the sample rack holder 132 includes a body portion 132a. The body portion 132a has a substantially constant size. As shown in FIG. 3E, the body portion 132a may be engaged with a recess 13a of each of the sample racks 13, thereby achieving the positioning the sample racks 13. In the example shown in the figures, the recess 13a is formed below a grip portion 13b of each of the sample racks 13. The body portion 132a may be in the form of an elongated rod. The body portion 132a is transverse to the multiple receiving channels 133 and is located at an end of each of the multiple receiving channels 133. It should be understood that the structure of the body portion 132a may vary according to the structure of the sample racks, and is not necessarily limited to the specific example shown in the figures.

The sample rack holder 132 is engaged with the tray 131 by means of a limiting structure 140. In the example shown in the figures, the limiting structure 140 is located at either end of the body portion 132a. The tray 131 further includes a flange 131e extending from an upper end of the front plate 131b. The limiting structure 140 is engaged in the flange 131e. The limiting structure 140 is configured to be movable between a first position and a second position. In the first position, the sample racks 13 are held in place as shown in FIG. 3E. In the second position, the body portion 132a exits the recesses 13a, i.e. the sample racks 13 in the sample loading/unloading area 18 are released, allowing the shuttle to operate the sample racks 13.

It should be understood that the structure of the sample loading/unloading apparatus and the portions thereof should not be limited to the specific examples shown in the figures, but can be varied as long as the functions described herein can be achieved.

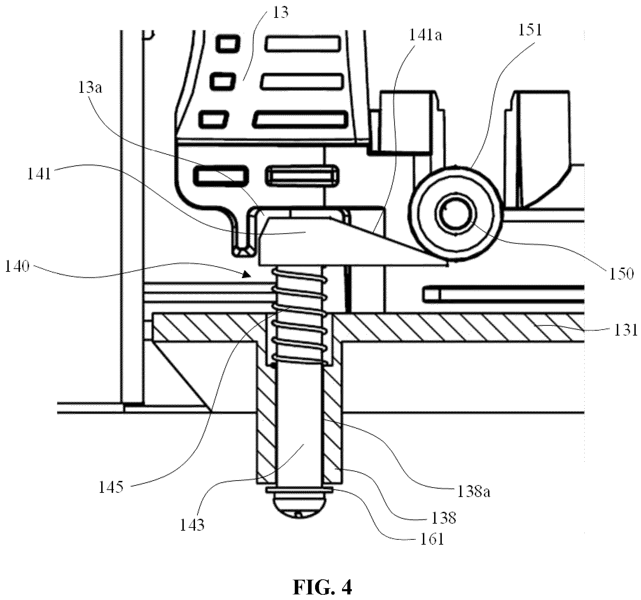

Referring to FIG. 4, FIG. 4 shows a limiting structure 140 according to the first embodiment of the present application. The limiting structure 140 includes an inclined portion 141, a convex structure 143 and an elastic member 145. The body portion 132a is fixed to the inclined portion 141 or integrated with the inclined portion 141. The inclined portion 141 is configured to be pushed downward by an actuator 150 as the sample loading/unloading apparatus 130 is moved toward the sample loading/unloading area 18. When the inclined portion 141 moves downward, the body portion 132a moves downward away from the recesses 13a, i.e. away from the sample racks 13, thereby allowing the sample racks 13 to displace.

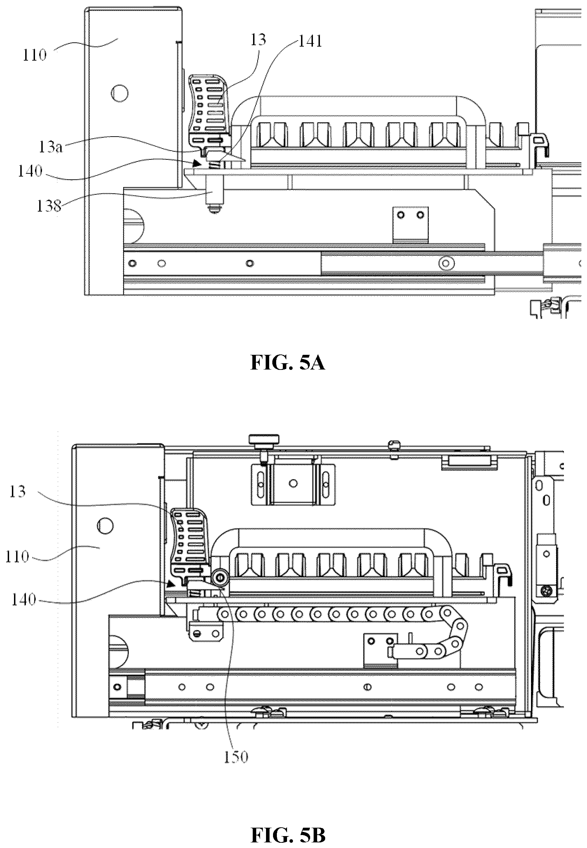

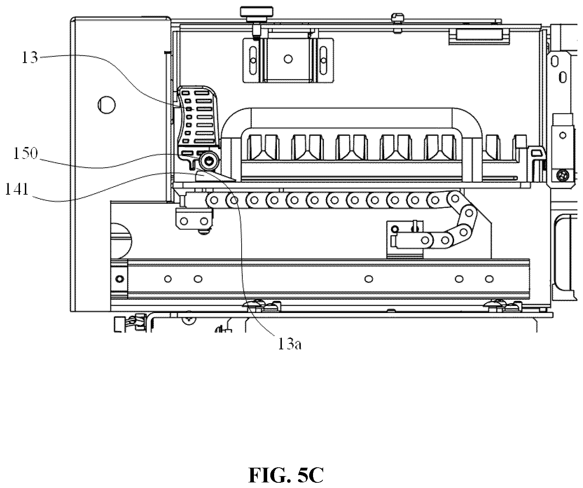

The inclined portion 141 has an inclined surface 141a that is inclined in a moving direction of the inclined portion (a vertical direction in the figure) (in other words, inclined in a moving direction (a horizontal direction in the figure) of the sample loading/unloading apparatus 130). Referring to FIG. 1C and FIG. 2A, the actuator 150 is attached to an inner side wall of the housing 15. When the sample loading/unloading apparatus 130 is placed on the opened drawer 110 as shown in FIG. 5A, the inclined portion 141 is away from the actuator 150 (not shown in FIG. 5A). When the drawer 110 and the sample loading/unloading apparatus 130 move toward the sample loading/unloading area 18, the inclined portion 141 approaches and contacts the actuator 150 (as shown in FIG. 5B). When the drawer 110 and the sample loading/unloading apparatus 130 move further toward the sample loading/unloading area 18, the actuator 150 pushes the inclined surface 141a of the inclined portion 141 so that the inclined portion 141 moves downward (as shown in FIG. 5C), that is, the sample rack holder 132 moves from the first position to the second position.

Referring again to FIG. 4, the actuator 150 has a cylindrical outer peripheral surface 151 that presses the inclined portion 141 down. The actuator 150 is rotatable, thereby reducing the friction between the cylindrical outer peripheral surface 151 and the inclined surface 141a.

In the example shown in the figure, the convex structure 143 is in the form of a pin. The tray 131 may further include a protrusion 138 extending downward from the flange 131e, in which a concave structure 138a for receiving the convex structure 143 is provided. In the example shown in the figure, the concave structure 138a is in the form of a through-hole extending through the protrusion 138 in a vertical direction. The convex structure 143 is prevented from moving upward and disengaging from the concave structure 138a by means of a gasket 161 at a free end of the convex structure 143. The protrusion 138 and the lower part of the pin may serve as guide portions that cooperate with each other to guide the movement of the limiting structure 140.

The elastic member 145 is in the form of a spring. The elastic member 145 is provided between the tray 131 and the sample rack holder 132 (specifically the inclined portion 141) to apply an upward force to the sample rack holder. When the actuator 150 does not actuate the sample rack holder 132, the elastic member 145 returns the sample rack holder 132 to the first position, i.e. the position where the displacement of the sample racks is limited.

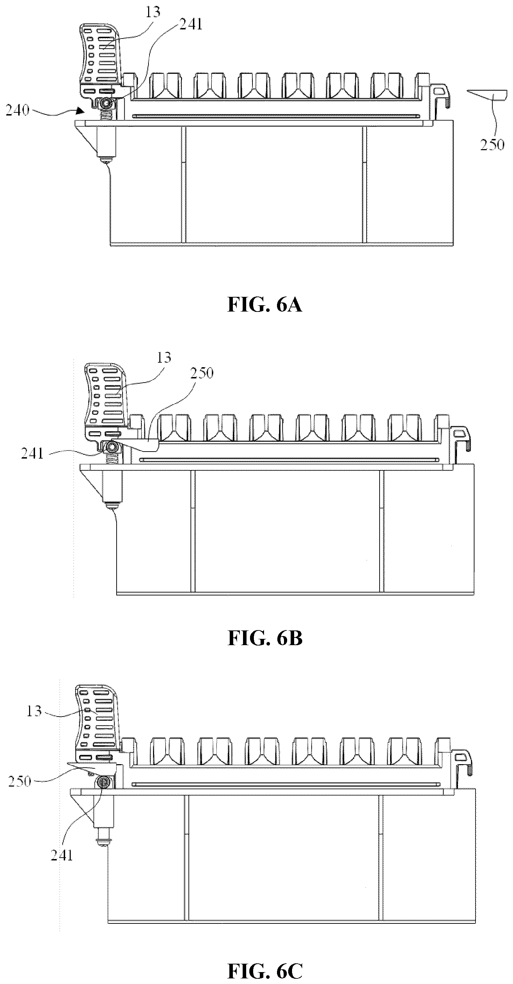

FIG. 6A to FIG. 6C show a limiting structure 240 according to a second embodiment of the present application and show the movement of the limiting structure 240 from a limiting position (a first position) to a releasing position (a second position).

In the example shown in FIG. 6A to FIG. 6C, the structure of the actuator and the structure of the inclined portion in FIG. 4 to FIG. 5C are interchanged. Specifically, the actuator 250 is in the form of an inclined block, and the limiting structure 240 has a cylindrical portion 241 that cooperates with the actuator 250 in the form of the inclined block. The working principle and process of the example shown in FIG. 6A to FIG. 6C are similar to those of the example shown in FIG. 4 to FIG. 5C, and thus will not be described in detail.

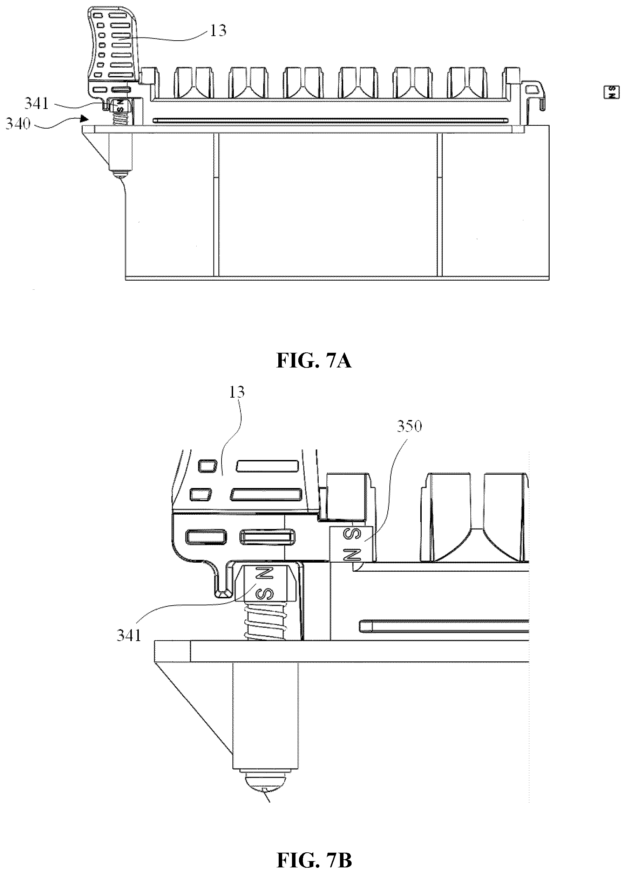

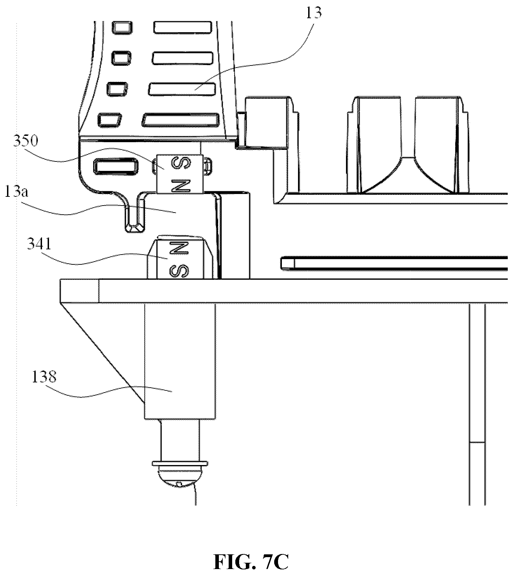

FIG. 7A to FIG. 7C show a limiting structure 340 according to a third embodiment of the present application and show the movement of the limiting structure 340 from a limit positioning (a first position) to a releasing position (a second position).

In the example shown in FIG. 7A to FIG. 7C, the actuator and the inclined portion in FIG. 4 to FIG. 5C are replaced by a pair of magnets 350 and 341. The sample rack holder 132 is moved from the first position to the second position under the action of mutual repulsion between the magnets 350 and 341.

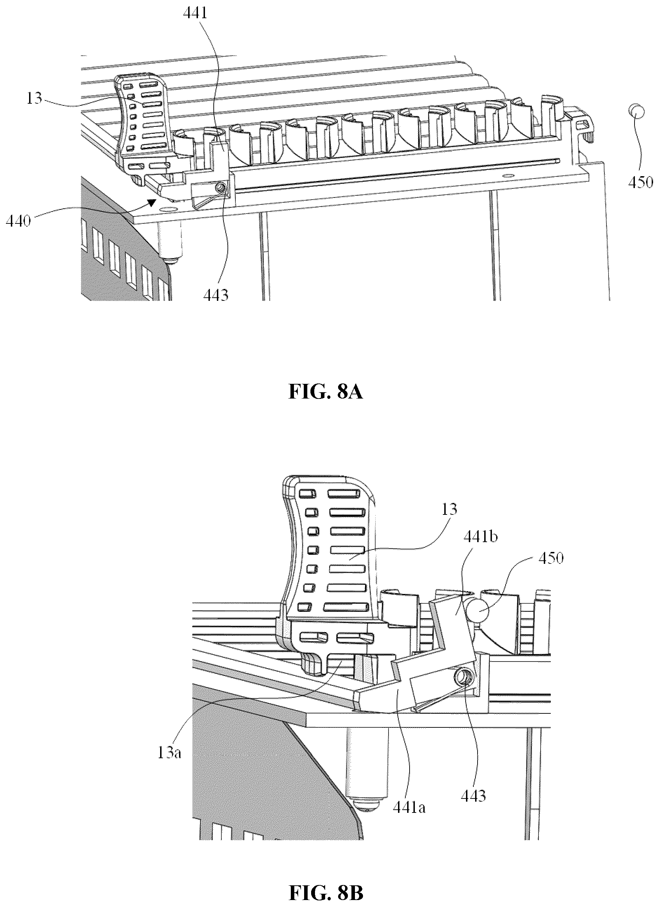

FIG. 8A to FIG. 8B show a limiting structure 440 according to a fourth embodiment of the present application and show the movement of the limiting structure 440 from a limiting position to a releasing position.

In the example shown in FIG. 8A and FIG. 8B, the limiting structure 440 includes a rotary block 441, which is rotatable relative to a shaft 443. The rotary block 441 has a substantially L shape, and includes a first supporting leg 441a connected to the body portion 132a and a second supporting leg 441b pushed by the actuator 450. In this example, the elastic member may be in the form of a torsion spring, applying elastic force to the rotary block 441 to restore the rotary block 441 to the state shown in FIG. 8A. In this example, the convex structure may be directly attached to the body portion 132a, or may be omitted.

It should be understood that the limiting structure should not be limited to the specific examples shown in the figures, but may be changed as long as the functions described herein can be achieved.

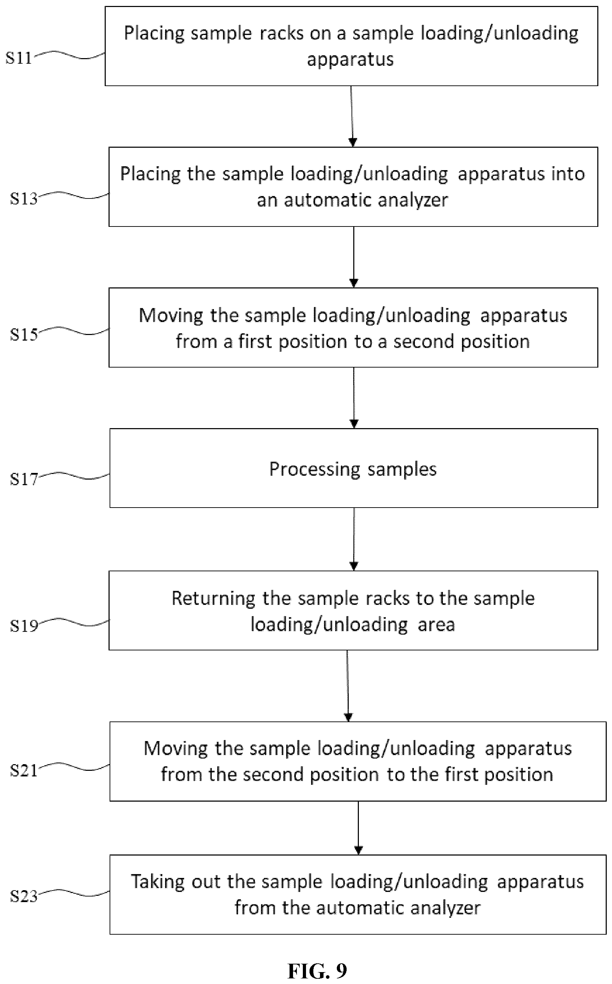

FIG. 9 is a flowchart of an operation method of an automatic analyzer according to an embodiment of the present application. As shown in FIG. 9, at step S11, at least one sample rack 13 to be detected is placed on a sample loading/unloading apparatus 130. At step S13, the sample loading/unloading apparatus 130 is handled into the automatic analyzer 10. At step S15, the sample loading/unloading apparatus 130 is moved from a first position to a second position within a sample loading/unloading area 18. At step S17, the samples in the sample containers on the sample rack are processed. After the processing is completed, the sample rack 13 is moved back to the sample loading/unloading area 18, see step S19. At step S21, the sample loading/unloading apparatus 130 is moved back from the second position to the first position. At step S23, the sample loading/unloading apparatus 130 is taken out from the automatic analyzer 10.

Although various embodiments and variations of the present application have been described above in detail, those skilled in the art should understand that the present application is not limited to the specific embodiments and variations described above, but may include various other possible conjunctions and combinations. Other modifications and variations may be implemented by those skilled in the art without departing from the spirit and scope of the present application. All these modifications and variations fall within the scope of the present application. Moreover, all of the members described herein may be replaced by other technically equivalent members.

## Claims

1. A sample loading/unloading apparatus for an automatic analyzer, comprising:
a tray configured to carry a plurality of sample racks on which sample containers are loaded, and to be placed in a sample loading/unloading area of the automatic analyzer; and
a sample rack holder engaged with the tray and movable between a first position where the sample racks are held in place and a second position where the sample racks are allowed to be released within the sample loading/unloading area.

2. The sample loading/unloading apparatus according to claim 1, wherein the tray is provided with a plurality of parallel receiving channels for separating the sample racks from each other.

3. The sample loading/unloading apparatus according to claim 1, wherein the tray is provided with indicators for indicating whether the sample racks are loaded.

4. The sample loading/unloading apparatus according to claim 1, wherein the tray is provided with a handle for operation on each of two opposite sides of the tray, respectively.

5. The sample loading/unloading apparatus according to claim 2, wherein the sample rack holder is transverse to the plurality of receiving channels and is located at an end of each of the plurality of receiving channels.

6. The sample loading/unloading apparatus according to claim 5, wherein the sample rack holder is in the form of an elongated rod.

7. The sample loading/unloading apparatus according to claim 6, wherein the sample rack holder is provided with at least two convex structures, and the tray is provided with corresponding concave structures for receiving the convex structures respectively.

8. The sample loading/unloading apparatus according to claim 7, wherein each of the convex structures comprises a first guide portion, and each of the concave structures comprises a second guide portion for receiving the first guide portion to guide movement of the sample rack holder.

9. The sample loading/unloading apparatus according to claim 8, wherein each of the convex structures is in the form of a pin that extends from the sample rack holder.

10. The sample loading/unloading apparatus according to claim 9, wherein each of the concave structures extends downward from an upper surface of the tray so that the sample rack holder moves in a vertical direction.

11. The sample loading/unloading apparatus according to claim 10, wherein the sample rack holder has an inclined portion inclined in a movement direction of the sample rack holder for being pushed downward so that the sample rack holder moves from the first position to the second position.

12. The sample loading/unloading apparatus according to claims 1 to 11, further comprising an elastic member provided between the tray and the sample rack holder to apply an upward force to the sample rack holder.

13. An automatic analyzer comprising the sample loading/unloading apparatus according to any one of claims 1 to 12, further comprising:
a housing, in which a sample loading/unloading area is defined; and
an actuator configured to move the sample rack holder between the first position and the second position.

14. The automatic analyzer of claim 13, wherein the actuator is attached to at least an inner sidewall of the housing.

15. The automatic analyzer of claim 14, wherein the actuator has a cylindrical outer peripheral surface which is configured to press down the inclined portion of the sample rack holder.

16. The automatic analyzer of claim 15, wherein the actuator is rotatable.

17. The automatic analyzer according to any one of claims 13 to 16, further comprising:
a drawer movable relative to the housing and on which the sample loading/unloading apparatus can be placed so that the sample loading/unloading apparatus moves with the movement of the drawer.

18. An operation method of the automatic analyzer according to any one of claims 13 to 17, comprising the steps of:
placing at least one sample rack on the sample loading/unloading apparatus;
placing the sample loading/unloading apparatus in the automatic analyzer;
moving the sample loading/unloading apparatus from the first position to the second position within the sample loading/unloading area;
analyzing samples in sample containers on the sample rack;
returning the sample rack to the sample loading/unloading area after finishing analyzing;
moving the sample loading/unloading apparatus from the second position to the first position; and
taking out the sample loading/unloading apparatus from the automatic analyzer.
